# EUROPÄISCHE PATENTSCHRIFT

(11) **EP 4 511 564 B1**
(45) Veröffentlichungstag und Bekanntmachung des Hinweises auf die Patenterteilung: **08.10.2025**
(21) Anmeldenummer: 23727620.9
(22) Anmeldetag: 26.05.2023
(51) Int. Cl.: F01D 11/00

(54) **DICHTUNGSRING MIT ÜBERLAPPENDEN DICHTUNGSTEILEN UND STATORANORDNUNG MIT EINEM SOLCHEN**
SEALING RING HAVING OVERLAPPING SEALING PARTS, AND STATOR ARRANGEMENT HAVING SAME
BAGUE D'ÉTANCHÉITÉ AYANT DES PARTIES D'ÉTANCHÉITÉ SE CHEVAUCHANT, ET AGENCEMENT DE STATOR LA COMPRENANT

(30) Priorität: 02.06.2022 DE 102022205646
(43) Veröffentlichungstag der Anmeldung: 26.02.2025
(73) Patentinhaber: Siemens Energy Global GmbH & Co. KG, 81739 München (DE)
(72) Erfinder: AHMAD, Fathi, 41564 Kaarst (DE); GAND, Olivier, 40472 Düsseldorf (DE); GOSSILIN, Ralph, 45968 Gladbeck (DE); KURT, Nihal, 40231 Düsseldorf (DE); SCHWARZ, Stephan, 40476 Düsseldorf (DE)
(86) Internationale Anmeldenummer: PCT/EP2023/064153
(87) Internationale Veröffentlichungsnummer: WO 2023/232661

(56) Entgegenhaltungen:
- EP-A1- 3 885 535
- WO-A1-2008/093849
- CN-C- 1 103 007

## Beschreibung

Die Erfindung betrifft einen Dichtungsring zur Abdichtung eines Spaltes zwischen einer vorderen Statoreinheit und einer hinteren Statoreinheit bei einer Gasturbine.

Gasturbinen werden von mehreren axial aufeinanderfolgenden Segmenten gebildet. Bei der stehenden Struktur bildet ein Leitschaufelkranz mit stehenden Leitschaufeln beispielsweise eine Statoreinheit. Zwischen dieser Statoreinheit und einer vorhergehenden bzw. nachfolgenden Statoreinheit ist ein umlaufender Spalt vorhanden. Um einen Eintritt von Heißgas aus dem Strömungspfad der Gasturbine bzw. einen unzulässigen Austritt von Kühlluft durch den Spalt zu vermeiden, ist es in aller Regel erforderlich, einen Dichtungsring im Spalt vorzusehen.

Aus dem Stand der Technik sind verschiedene Bauweisen für entsprechende Dichtungsringe bekannt. Üblicherweise werden hierzu flache, segmentierte Stahlbänder eingesetzt, welche beidseitig in den benachbarten Statoreinheiten eingreifen. Eine beispielhafte Lösung hierzu offenbart die EP3885535A1. Dabei wird ein aus drei Teilen segmentierter Ring vorgeschlagen, welcher einen dreieckigen Querschnitt aufweist und bei dem die aneinander stoßenden Enden abschnittsweise überlappen.

Wenngleich verschiedene Lösungen zur Umfangssicherung des Dichtringes sowie zur Reduzierung von Leckagen zwischen den aufeinanderfolgenden Teilen des Dichtringes bekannt sind, so gibt es zwar taugliche, aber keine vollends zufriedenstellende Lösung.

Aufgabe der vorliegenden Erfindung ist daher, eine verbesserte Lösung für einen Dichtring zur Verfügung zu stellen, welcher einerseits eine Sicherung in Umfangsrichtung ermöglicht und andererseits eine Leckage zwischen den einzelnen Elementen des Dichtringes auf ein Minimum reduziert. Dabei gilt es, eine einfache und schnelle Montage zu ermöglichen.

Die gestellte Aufgabe wird durch eine erfindungsgemäße Ausführungsform eines Dichtringes nach der Lehre des Anspruchs 1 gelöst. Eine erfindungsgemäße Statoranordnung mit Verwendung eines entsprechenden Dichtringes ist im Anspruch 10 angegeben. Vorteilhafte Ausführungsformen sind Gegenstand der Unteransprüche.

Der gattungsgemäße Dichtring diente zur Abdichtung eines umlaufenden Spaltes zwischen einer auf einer vorderen Seite angeordneten vorderen Statoreinheit und einer auf einer hinteren Seite angeordneten hinteren Statoreinheit. Worum es sich hierbei handelt, ist für den Dichtring zunächst unerheblich. In besonders bevorzugter Verwendung wird der Dichtring bei einer Gasturbine eingesetzt. Dabei weist der Dichtring mehrere Dichtungsteile auf.

Durch den Dichtring ist eine Rotorachse definiert, wobei eine Teilungsebene durch die Rotorachse gegeben ist. Auf einer Seite der Teilungsebene befindet sich die obere Seite und gegenüberliegend die untere Seite. Senkrecht zur Teilungsebene lässt sich der Dichtring weiterhin in eine linke Seite und eine rechte Seite unterteilen. Insofern lässt sich der Dichtring in vier Sektoren im Umlauf unterteilen: rechts-oben, rechts-unten, links-unten und links-oben.

Der erfindungsgemäße Dichtring erfordert hierbei ein oberes linkes Dichtungsteil im Sektor links-oben und ein über die Rotorachse gegenüberliegendes unteres rechtes Dichtungsteil im Sektor rechts-unten und ein oberes rechtes Dichtungsteil im Sektor rechts-oben und ein unteres linkes Dichtungsteil im Sektor links-unten. Hierbei ist nicht gefordert, dass sich die Dichtungsteile jeweils komplett im jeweiligen Sektor befinden. Zumindest ist es erforderlich, dass jedes dieser vier Dichtungsteile, einen Dichtungsabschnitt und einen Winkelabschnitt und einen Überlappungsabschnitt aufweisen.

Der Dichtungsabschnitt erstreckt sich hierbei in Umfangsrichtung über den Großteil der Länge des Dichtungsteils. Dabei weist der Dichtungsabschnitt eine Dichtungsstärke in radialer Richtung auf. Quer hierzu in axialer Richtung weist der Dichtungsabschnitt eine Dichtungsbreite auf, welche zumindest der 5-fachen Dichtungsstärke entspricht. Hieraus ergibt sich die flache Gestalt des Dichtungsabschnitts.

Der Kontaktabschnitt schließt sich an einem Ende an den Dichtungsabschnitt an und erstreckt sich ebenso in Umfangsrichtung. Dabei weist der Kontaktabschnitt die übereinstimmende, gleichbleibende Dichtungsbreite auf. Jedoch ist die Stärke des Kontaktabschnitts gegenüber der Dichtungsstärke reduziert auf höchstens der 0,6-fachen Dichtungsstärke.

Der Winkelabschnitt ist am gegenüberliegenden Ende des Dichtungsabschnitts angeordnet. Im Gegensatz zum Kontaktabschnitt ist dieser jedoch nur auf der hinteren Seite angeordnet und erstreckt sich in axialer Richtung über ungefähr die halbe Breite des Dichtungsteils. Dabei soll der Winkelabschnitt ebenso eine geringere Stärke von höchstens der 0,6-fachen Dichtungsstärke aufweisen. Im Gegensatz zum Kontaktabschnitt ist es erforderlich, dass sich der Winkelabschnitt um eine axial ausgerichtete Knickachse gegenüber der Erstreckung des Dichtungsabschnitts abgewinkelt in ungefähr radialer Richtung erstreckt. Die radiale Erstreckung des Winkelabschnitts sollte hierbei vorzugsweise zumindest der halben Dichtungsbreite und maximal der Dichtungsbreite entsprechen. Zur Herstellung kann vorzugsweise ein freies Ende in radialer Richtung umgebogen werden.

Der Überlappungsabschnitt ist benachbart zum Winkelabschnitt auf der vorderen Seite angeordnet. Dabei ist der Überlappungsabschnitt analog zu dem Kontaktabschnitt auszuführen. Insofern erstreckt sich der Überlappungsabschnitt am Ende des Dichtungsabschnitts in Umfangsrichtung und weist dabei ebenso eine höchstens 0,6-fache Dichtungsstärke auf. Entsprechend der Anordnung benachbart zum Winkelabschnitt ist jedoch die Breite in axialer Richtung ebenso auf ungefähr der halben Breite des Dichtungsteils reduziert.

Durch die neue Formgebung mit der spezifischen Anordnung der Kontaktabschnitte und gegenüberliegend dem Winkelabschnitt und dem Überlappungsabschnitt wird einerseits eine vorteilhafte Abdichtung ermöglicht und anderseits eine einfache Montage gewährleistet.

Dabei ist vorteilhaft vorgesehen, dass sich jeweils zwei Kontaktabschnitte benachbarter Dichtungsteile überlappen. Naheliegend ist es dabei erforderlich, dass ein äußerer Kontaktabschnitt auf der radial äußeren Seite und ein benachbarter innerer Kontaktabschnitt auf der radial inneren Seite liegen muss.

Weiterhin ist dabei vorgesehen, dass sich die Kontaktabschnitte der linken Dichtungsteile, d.h. der innere Kontaktabschnitt des oberen oder unteren linken Dichtungsteils den äußeren Kontaktabschnitt des unteren respektive oberen linken Dichtungsteils, und die Kontaktabschnitte der rechten Dichtungsteile, d.h. der innere Kontaktabschnitt des oberen oder unteren rechten Dichtungsteils den äußeren Kontaktabschnitt des unteren respektive oberen rechten Dichtungsteils, überlappen.

Analog ist vorteilhaft vorgesehen, dass sich jeweils zwei Überlappungsabschnitte benachbarter Dichtungsteile überlappen. Naheliegend ist es dabei erforderlich, dass ein äußerer Überlappungsabschnitt auf der radial äußeren Seite und ein benachbarter innerer Überlappungsabschnitt auf der radial inneren Seite liegen muss.

Durch die Ausführung der Dichtungsteile mit den überlappenden Kontaktabschnitten an einem Ende und der Kombination aus Winkelabschnitt und Überlappungsabschnitt am anderen Ende wird sowohl eine Sicherung in Umfangsrichtung ermöglicht als auch die Leckage in zulässige Grenzen gehalten werden kann. Weiterhin ist diese Ausführungsform vorteilhaft hinsichtlich der Herstellung.

Die Anordnung welcher Kontaktabschnitt radial innen und welcher Kontaktabschnitt radial außen liegt, ist zunächst unerheblich. Unter Betrachtung der Drehrichtung eines bestimmungsgemäß innerhalb des Dichtungsrings angeordneten Rotors ist es jedoch vorteilhaft, wenn der radial innen liegende Kontaktabschnitt mit dem freien Ende in der Drehrichtung zeigt. Hieraus folgert zeigte der radial außen liegende Kontaktabschnitt mit dem freien Ende entgegen der Drehrichtung.

Analog gilt gleiches für die inneren Überlappungsabschnitte und die äußeren Überlappungsabschnitte in Bezug zur Drehrichtung.

Die Anordnung des inneren Kontaktabschnitts und des äußeren Kontaktabschnitts an den linken bzw. rechten, oberen bzw. unteren Dichtungsteil hängt insofern bei der vorteilhaften Ausführung von der Orientierung und einer Drehrichtung ab.

Betrachtet man den Dichtungsring in Achsrichtung von der hinteren Seite zur vorderen Seite und ist eine bestimmungsgemäße Drehrichtung im Uhrzeigersinn gegeben, so weist vorteilhaft das linke untere Dichtungsteil und das rechte obere Dichtungsteil den inneren Kontaktabschnitt und demgegenüber das linke obere Dichtungsteil und das rechte untere Dichtungsteil den äußeren Kontaktabschnitt auf. Dabei zeigen die inneren Kontaktabschnitte in Uhrzeigerrichtung und die äußeren Kontaktabschnitte entgegen der Uhrzeigerrichtung.

Unabhängig von der Drehrichtung und der Anordnung der überlappenden inneren und äußeren Kontaktabschnitte ist es in jedem Fall vorteilhaft, wenn sich die überlappenden Kontaktabschnitte auf der rechten Seite über die Rotorachse gegenüberliegend zu den Kontaktabschnitten auf der linken Seite angeordnet sind.

Grundsätzlich wäre es möglich, die Kontaktabschnitt im Bereich einer Teilungsebene anzuordnen. Die Teilungsebene wird hierbei definiert durch die Rotorachse wobei bestimmungsgemäß die benachbarten Statoreinheiten durch die Teilungsebene in eine obere Einheit und in eine untere Einheit zur Ermöglichung einer Montage eines Rotors unterteilt werden. Anzumerken ist, dass nicht gefordert wird, dass die bauliche Trennung der Statoreinheiten exakt in der Teilungsebene erfolgt, sondern vielmehr die Statoreinheiten entlang der Teilungsebene auseinandergenommen werden können.

Unter Berücksichtigung einer bestimmungsgemäßen Teilungsebene ist es jedoch besonders vorteilhaft, wenn die Kontaktabschnitte auf einer Seite oberhalb und auf gegenüberliegender Seite unterhalb der Teilungsebene angeordnet werden. In Drehrichtung betrachtet sollten hierbei die Kontaktabschnitte jeweils vor der Teilungsebene angeordnet sein. Entsprechend vorherigem Beispiel mit der Drehrichtung im Uhrzeigersinn ist es somit vorteilhaft, wenn sich Kontaktabschnitte auf der linken Seite unterhalb der Teilungsebene und die Kontaktabschnitte auf der rechten Seite oberhalb der Teilungsebene befinden.

Die vorteilhafte Anordnung der innen Kontaktabschnitte und der äußeren Kontaktabschnitte zusammen mit der Positionierung der Kontaktabschnitte zur Teilungsebene leicht versetzt, d.h. um die Rotorachse gedreht, ermöglicht eine besonders vorteilhafte Montage einer oberen Hälfte der Statoreinheiten auf die untere Hälfte der Statoreinheiten. Dabei wird eine zuverlässige Fügung der Dichtungsteile versetzt zur Teilungsebene in die jeweils gegenüberliegende Statorhälfte ermöglicht, ohne dass eine Gefahr der Beschädigung der Dichtungsteile beim Fügevorgang der Hälften besteht.

Grundsätzlich, aber insbesondere in Verbindung mit der Anordnung der Kontaktabschnitte vor der Teilungsebene, ist es weiterhin besonders vorteilhaft, wenn die Erstreckung in Umfangsrichtung des Dichtungsteils mit dem jeweils inneren Kontaktabschnitt geringer ist als die Erstreckung in Umfangsrichtung des Dichtungsteils mit dem überlappenden äußeren Kontaktabschnitt. Mit dieser Ausführungsform ist es beispielsweise möglich, eine Anordnung der Kontaktabschnitte außerhalb der Teilungsebene und demgegenüber die gleiche Anordnung aller Winkelabschnitte im jeweiligen Sektor zu ermöglichen.

Die Winkelabschnitte sollen insbesondere eine Umfangssicherung des jeweiligen Dichtungsteils ermöglichen. Unter Berücksichtigung benachbarter Dichtungsteile ist es dabei vorteilhaft, wenn zu jedem Winkelabschnitt eines Dichtungsteils ein gegenüberliegender Winkelabschnitt eines benachbarten Dichtungsteils angeordnet ist. Somit können zwei Dichtungsteile mit den zugehörigen Winkelabschnitten an gleicher Stelle in Umfangsrichtung gesichert werden.

Dabei ist es zur Reduktion einer Leckage weiterhin besonders vorteilhaft, wenn die benachbarten Winkelabschnitte mit dem jeweils freien Ende aneinander anliegen. Somit kann ein Spalt zwischen den einander gegenüberliegenden Winkelabschnitten vermieden werden. Um einen Ausgleich thermischer Dehnung in Umfangsrichtung **(d.h.** einer Längenänderung des Dichtungsabschnitts relativ zur Größenänderung der benachbarten vorderen bzw. hinteren Statoreinheit) zuzulassen, ist es dabei weiterhin vorteilhaft, wenn im Ausgangszustand die Winkelabschnitte im Bereich deren Anbindung an den jeweiligen Dichtungsabschnitt voneinander beanstandet sind. Zur Ermöglichung eines Ausgleichs thermischer Dehnung ist dabei weiterhin vorteilhaft eine elastische Verformung der Winkelabschnitte vorzusehen.

Wenngleich es hinreichend wäre, im Umfang vier Dichtungsteile einzusetzen, so ist es jedoch von Vorteil, wenn weiterhin ein oberes Hauptteil und ein unteres Hauptteil als weitere Dichtungsteile im Dichtungsring vorhanden sind. In diesem Fall ist es erforderlich, dass die Hauptteile jeweils ebenso einen Dichtungsabschnitt und an einem Ende des Dichtungsabschnitts einen Winkelabschnitt sowie einen Überlappungsabschnitt aufweisen. Im Gegensatz zu den linken und rechten Dichtungsteilen ist jedoch weiterhin vorteilhaft vorzusehen, dass die beiden Hauptteile ebenso am gegenüberliegenden Ende des Dichtungsabschnitt gleichfalls einen Winkelabschnitt sowie einen Überlappungsabschnitt aufweisen. Hinsichtlich der Ausführung des Dichtungsabschnitts, des Winkelabschnitt sowie des Überlappungsabschnitts gilt gleiches wie zuvor bei den linken und rechten Dichtungsteilen erläutert.

Dabei ist es weiterhin vorteilhaft, wenn sich der Dichtungsabschnitt der jeweiligen Hauptteile im Umfang über zumindest 120° erstreckt. Besonders vorteilhaft ist eine Erstreckung der Dichtungsabschnitte in Umfangsrichtung über zumindest 150°.

Der erfindungsgemäße Dichtungsring ermöglicht die Realisierung einer erfindungsgemäßen Statoranordnung. Dabei weist die gattungsgemäße Statoranordnung zunächst einmal eine vordere Statoreinheit auf einer vorderen Seite und eine hintere Statoreinheit auf einer hinteren Seite auf. Zwischen der vorderen Statoreinheit und der hinteren Statoreinheit befindet sich ein Spalt, in dem ein Dichtungsring angeordnet ist. Erfindungsgemäß handelt es sich bei dem Dichtungsring um eine Ausführung gemäß vorheriger Beschreibung.

Die Ausführung der vorderen Statoreinheit bzw. der hinteren Statoreinheit ist zunächst unerheblich, wobei die Ausführung insbesondere vorteilhaft zur Anwendung kommen kann, wenn die vordere Statoreinheit eine Mehrzahl im Umfang verteilt angeordneter Statorsegmente umfasst. Analog ist die Anwendung vorteilhaft, wenn die hintere Statoreinheit eine Mehrzahl im Umfang verteilt angeordneter Statorsegmente umfasst.

Dabei ist es weiterhin besonders vorteilhaft, wenn zumindest vier der hinteren Statorsegmente jeweils eine Aussparung aufweisen, wobei die Aussparung auf der zum Spalt weisenden Seite angeordnet ist und in die jeweils zumindest ein Winkelabschnitt eingreift. Hiervon unabhängig kann vorgesehen sein, dass auch andere bzw. alle Statorsegmente die gleiche Aussparung aufweisen.

Bei den segmentierten Statorsegmenten kann vorgesehen sein, dass auf der linken Seite und auf der rechten Seite sich jeweils ein Statorsegment beidseitig über die Teilungsebene erstreckt. Wird nunmehr die Statoreinheit in eine obere Hälfte und in eine untere Hälfte geteilt, so sind die in Bereich der Teilungsebene befindlichen Statorsegmente entweder in der oberen Hälfte oder in der unteren Hälfte zu montieren.

Besonders bevorzugt wird die Zuordnung in die obere Hälfte oder untere Hälfte davon abhängig gemacht, in welcher Hälfte derjenige Dichtungsteil montiert ist, welcher den äußeren Kontaktabschnitt aufweist. Hierbei sollten die beiden auf linker Seite und auf rechter Seite, an die Dichtungsteile mit den äußeren Kontaktabschnitten angrenzenden, hinteren Statorsegmente in den jeweils gleichen Hälften montiert sein.

Im Falle einer Drehrichtung im Uhrzeigersinn und der Ausführung des oberen linken Dichtungsteils mit dem äußeren Kontaktabschnitt sollte somit bevorzugt auf der linken Seite das hintere linke Statorsegment, welches von der Teilungsebene geschnitten wird, in der oberen Hälfte montiert sein. Analog gilt für die Ausführung mit dem unteren rechten Dichtungsteil mit dem äußeren Kontaktabschnitt, dass das hintere rechte Statorsegment, welches von der Teilungsebene geschnitten wird, in der unteren Hälfte montiert ist.

Um eine vorteilhafte Fügung der oberen Hälfte und der unteren Hälfte von geteilten Statoreinheiten mit den geteilten Dichtungsring zu ermöglichen ist es weiterhin vorteilhaft, wenn sich das Dichtungsteil auf der rechten Seite **bzw.** auf der linken Seite mit dem äußeren Kontaktabschnitt benachbart zu denjenigen hinteren Statorsegmenten, welche von der Teilungsebene geschnitten werden, sich über die Teilungsebene hinaus und weiterhin über die gesamte Breite des benachbarten Statorsegments in Umfangsrichtung hinaus erstreckt.

Bei der beispielhaften Drehrichtung im Uhrzeigersinn mit den oberen linken Dichtungsteil mit dem äußeren Kontaktabschnitt und einem auf der linken Seite hinteren Statorsegment, welches in einer oberen Hälfte montiert ist und sich über die Teilungsebene erstreckt, ist es entsprechend vorteilhaft, wenn sich das obere linke Dichtungsteil über die Teilungsebene hinaus nach unten und bis unterhalb des an der Teilungsebene benachbart angeordneten Statorsegments erstreckt.

Analog bei der beispielhaften Drehrichtung im Uhrzeigersinn mit den unteren rechten Dichtungsteil mit dem äußeren Kontaktabschnitt und einem auf der rechten Seite hinteren Statorsegment, welches in einer unteren Hälfte montiert ist und sich über die Teilungsebene erstreckt, ist es entsprechend vorteilhaft, wenn sich das untere rechte Dichtungsteil über die Teilungsebene hinaus nach oben und bis oberhalb des an der Teilungsebene benachbart angeordneten Statorsegments erstreckt.

In den nachfolgenden Figuren wird eine beispielhafte Ausführungsform für einen erfindungsgemäßen Dichtungsring sowie dessen Anordnung in einem Spalt zwischen vorderer und hinterer Statoreinheit skizziert. Es zeigen:
- Fig. 1: schematisch einen beispielhaften Dichtungsring umfassend sechs Dichtungsteile;
- Fig. 2: eine perspektivische Ansicht auf einen Abschnitt des Dichtungsrings;
- Fig. 3: eine Seitenansicht auf das linke obere Dichtungsteil;
- Fig. 4: eine Seitenansicht auf das linke untere Dichtungsteil;
- Fig. 5: den Kontaktabschnitt der Dichtungsteile;
- Fig. 6: den Winkelabschnitt und der Überlappungsabschnitt am linken unteren Dichtungsteil;
- Fig. 7: den Winkelabschnitt und der Überlappungsabschnitt am linken oberen Dichtungsteil;
- Fig. 8: die Verbindung zweier Winkelabschnitte und Überlappungsabschnitte;
- Fig. 9: abschnittsweise die vordere Statoreinheit und die hintere Statoreinheit;
- Fig. 10: abschnittsweise den Dichtungsring montiert in der hinteren Statoreinheit;
- Fig. 11: die Teilung des Dichtungsrings und der hinteren Statoreinheit in eine obere Hälfte und untere Hälfte.

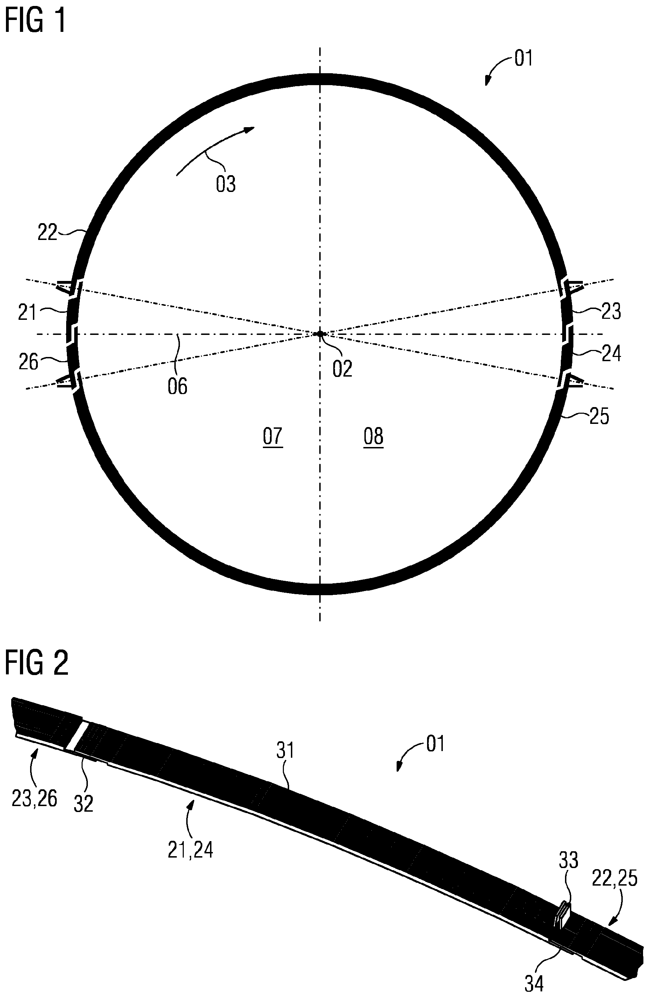

In der Figur 1 wird schematisch eine beispielhafte Ausführungsform für einen erfindungsgemäßen Dichtungsring 01 skizziert, welcher 01 sechs Dichtungsteile umfasst. Dargestellt wird der Dichtungsring 01 in Achsrichtung betrachtet, wobei die horizontale Mitte eine Teilungsebene 06 darstellt und in der Darstellung links der Rotorachse 02 sich die linke Seite 07 befindet und rechts der Rotorachse 02 die rechte Seite 08. Angenommen wird in diesem Ausführungsbeispiel eine Drehrichtung 03 eines bestimmungsgemäß innerhalb des Dichtungsring 01 angeordneten Rotors im Uhrzeigersinn. Weiterhin ist in diesem Ausführungsbeispiel vorgesehen, dass in der Figur 1 eine Betrachtung von der hinteren Seite 04 zur vorderen Seite 05 gegeben ist.

Der Dichtungsring 01 umfasste zunächst einmal als wesentliche Komponenten das linke obere Dichtungsteil 21 und über die Rotorachse 02 gegenüberliegend das rechte untere Dichtungsteil 24. Diese sind jeweils benachbart angeordnet zu einem linken unteren Dichtungsteil 26 und einem hierzu gegenüberliegenden rechten oberen Dichtungsteil 23.

Weiterhin umfasst dieses Ausführungsbeispiel ein oberes Hauptteil 22, welches 22 sich vom linken oberen Dichtungsteil 21 bis zum rechten oberen Dichtungsteil 23 erstreckt. Analog befindet sich auf der unteren Seite ein unteres Hauptteil 25 zwischen dem rechten unteren Dichtungsteil 24 und dem linken unteren Dichtungsteil 26.

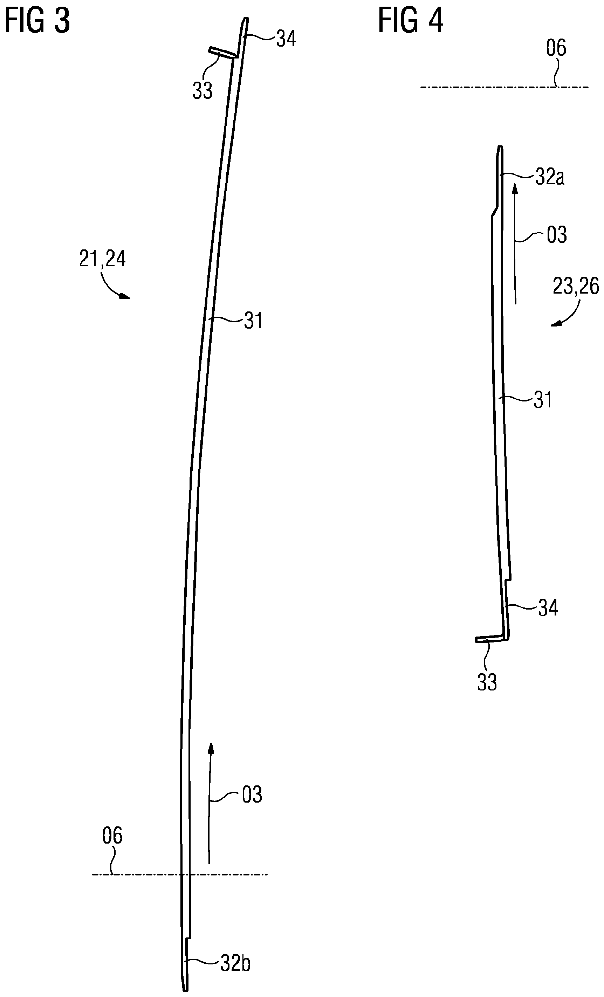

Für die weitere Beschreibung der linken und rechten Dichtungsteile 21, 23, 24 und 26 wird auf die nachfolgenden Figuren 2, 3 und 4 verwiesen. Dargestellt ist in den Figuren 2 und 3 beispielhaft das linke obere Dichtungsteil 21, welches 21 identisch zum rechten unteren Dichtungsteil 24 ausgeführt ist. Demgegenüber ist in der Figur 4 das linke untere Dichtungsteil 26 dargestellt, welches 26 identisch zum gegenüberliegenden rechten oberen Dichtungsteil 23 ausgeführt ist.

Zu erkennen ist, dass diese Dichtungsteile 21, 23, 24 und 26 über deren wesentlichen Länge in Umfangsrichtung einen Dichtung Abschnitt 31 aufweisen. Dieser 31 besitzt in radialer Richtung eine Dichtungsstärke und in axialer Richtung eine Dichtungsbreite.

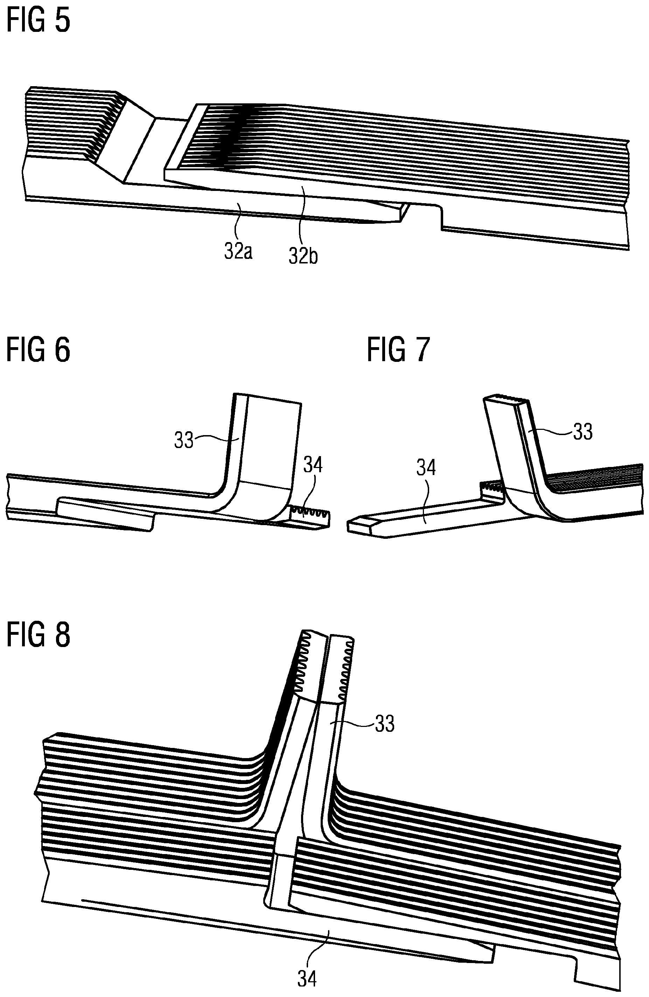

Jeweils an einem Ende des Dichtungsabschnitts 31 ist ein Kontaktabschnitt 32 angeordnet. Dieser 32 erstreckt sich gleichfalls in Umfangsrichtung mit der Dichtungsbreite. Hierbei ist vorgesehen, dass sich jeweils Kontaktabschnitte 32 benachbarter Dichtungsteile 21, 26 und 23, 24 überlappen - siehe hierzu insbesondere Fig. 5. Entsprechend ist es erforderlich, dass an einem Dichtungsteil 21, 24 der benachbarten Dichtungsteile 21, 26 und 23, 24 ein äußerer Kontaktabschnitt 32b auf einer radial außen liegenden Seite vorhanden ist und am anderen Dichtungsteil 23, 26 ein innerer Kontaktabschnitt 32a auf einer radial innen liegenden Seite angeordnet ist.

Bezugnehmend auf die Figur 1 ist zu erkennen, dass die Kontaktabschnitte 32 im Bereich der Teilungsebene 06 vorgesehen sind.

Gegenüberliegend zu den Kontaktabschnitten 32 an den Dichtungsteilen 21, 26 und 23, 24 befindet sich ein Winkelabschnitt 33, welcher 33 auf der hinteren Seite 04 angeordnet ist und ungefähr die halbe Dichtungsbreite aufweist. Dabei erstreckt sich der Winkelabschnitt 33 mit reduzierter Stärke in ungefähr radialer Richtung, wobei die Erstreckung in radialer Richtung ungefähr der Breite des Winkelabschnitts 33 entspricht - siehe hierzu insbesondere die Figuren 6 und 7.

Weiterhin ist vorgesehen, dass zu jedem Winkelabschnitt 33 eines Dichtungsteils 21-26 ein gegenüberliegender Winkelabschnitt 33 eines benachbarten Dichtungsteils 21-26 vorhanden ist - siehe insbesondere Fig. **8****.** Dabei ist weiterhin vorgesehen, dass die gegenüberliegenden Winkelabschnitte 33 an deren freien Ende aneinander anliegen während hingegen die Winkelabschnitte 33 im Bereich der Anbindung zu dem jeweiligen Dichtungsabschnitt 31 voneinander beanstandet sind.

In axialer Richtung benachbart zum Winkelabschnitt 33 befindet sich am Ende des Dichtungsabschnitts 31 jeweils ein Überlappungsabschnitt 34. Dieser weist analog der Kontaktabschnitte 32 eine reduzierte Stärke jedoch nur ungefähr die halbe Dichtungsbreite auf. Vorgesehen ist hier ebenso das zwei Überlappungsabschnitte benachbarter Dichtungsteile 21-26 einander überlappen. Entsprechend ist analog der Kontaktabschnitte 32 an den Dichtungsteilen 21-26 ein innerer und ein äußerer Überlappungsabschnitt 34 wechselnd erforderlich. Siehe hierzu auch die Figuren 6-8.

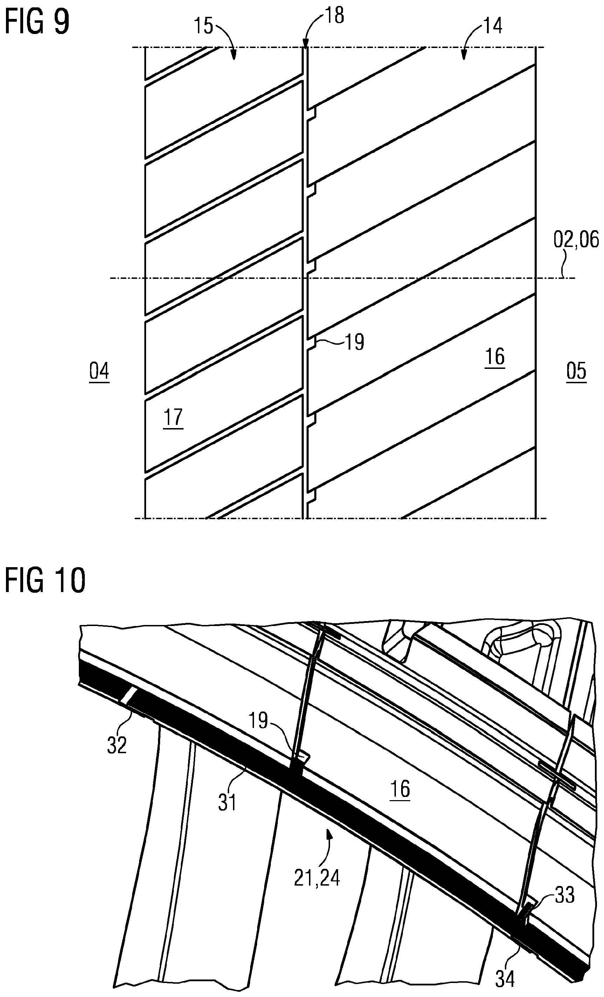

In der Figur 9 wird schematisch ein Abschnitt einer Statoranordnung mit einer hinteren Statoreinheit 14 und einer vorderen Statoreinheit 15 skizziert. Zu erkennen ist die Bildung der Stadttoreinheiten aus einer Mehrzahl hinterer Statorsegmente 16 bzw. vorderer Statorsegmente 17. Zwischen der hinteren Statoreinheit 14 und der vorderen Statoreinheit 15 befindet sich ein umlaufender Spalt 18, in dem 18 der beispielhafte Dichtungsring 01 - wie zuvor dargestellt - angeordnet ist (in dieser Ansicht wurde auf die Darstellung des Dichtungsrings 01 verzichtet).

Zu erkennen ist zumindest, dass die Statorsegmente eine gegenüber der Rotorachse 02 geneigte Gestalt aufweisen. Dieses führt dazu, dass einzelne Statorsegmente 16, 17 von der Teilungsebene 06 geschnitten werden. Bei einer Aufteilung in einer oberen Hälfte und einer unteren Hälfte ist es insofern erforderlich, eine Anordnung der im Bereich der Teilungsebene 06 vorhandenen Statorsegmente 16, 17 in entweder die obere Hälfte oder untere Hälfte vorzunehmen.

Weiterhin skizziert ist, dass die hinteren Statorsegmente 16 jeweils eine Aussparung 19 in einer Ecke des Bauteils zum Spalt 18 weisend aufweisen.

In der Figur 10 ist nunmehr abschnittsweise die Anordnung des Dichtungsrings 01 an der hinteren Statoreinheit 14 skizziert. Zu erkennen sind wiederum die hinteren Statorsegmente 16 mit den jeweiligen Aussparungen 19.

Der axial hintere Randabschnitt des Dichtungsrings 01 ist hierbei in einer axial offenen Nut in den hinteren Statorsegmenten 16 aufgenommen. In dieser Darstellung zu erkennen ist die Anordnung des oberen linken Dichtungsteils 21 bzw. des unteren rechten Dichtungsteils 24 mit dem Dichtungsabschnitt 31, den am linken Ende befindlichen Kontaktabschnitt 32 und den am rechten Ende angeordneten Winkelabschnitt 33 sowie Überlappungsabschnitt 34. Die gegenüberliegenden Winkelabschnitte 33 sind hierbei in Umfangsrichtung durch den Eingriff in die Aussparung 19 gesichert.

Zu erkennen ist in dieser Darstellung weiterhin, dass sich die Dichtungsteile 21,24 mit dem äußeren Kontaktabschnitt 32b in Umfangsrichtung über die breite eines hinteren Statorsegments 16 hinaus erstreckt, so dass die überlappenden Kontaktabschnitte 32 der benachbarten Dichtungsteile 21,26; 23,24 in Umfangsrichtung betrachtet im Bereich eines Statorsegments 16 beanstandet von den Teilungsfugen zwischen den einzelnen Statorsegmenten 16 angeordnet ist.

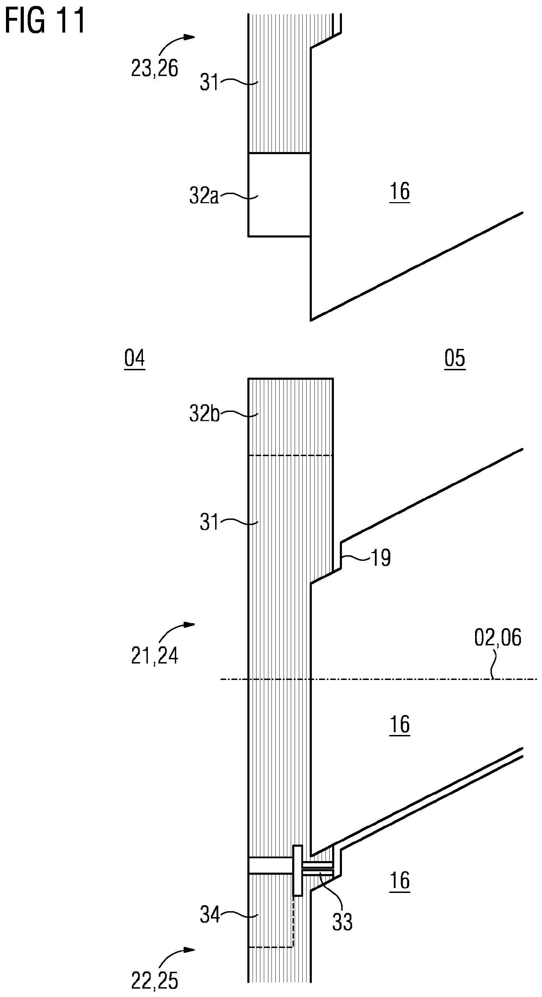

In der Figur 11 wird die Aufteilung des Dichtungsrings 01 und der hinteren Statoreinheit 14 auf eine obere Hälfte und eine untere Hälfte skizziert. Diese Aufteilung ist erforderlich, sofern das einen Rotor umgebende Gehäuse und somit der Dichtungsring 01 und die Statoreinheiten 14, 15 zur Montage eines Rotors geteilt werden müssen.

In diesem Ausführungsbeispiel ist vorgesehen, dass das Dichtungsteil 21, 24 mit dem äußeren Kontaktabschnitt 32b in derjenigen Hälfte montiert ist, in der auch ein benachbartes hinteres Statorsegment 16 montiert ist, welches von der Teilungsebene 06 im Bereich des Spalts 18 geschnitten wird.

Der Winkelabschnitt 33 des Dichtungsteils 21, 24 ist in Drehrichtung 03 nachfolgend der Teilungsebene 06 in der Aussparung 19 zwischen benachbarten hinteren Statorsegmenten 16 gesichert. Das Dichtungsteil 21, 24 erstreckt sich hierbei entgegen der Drehrichtung 03 über das an der Teilungsebene 06 nebenliegende hintere Statorsegment 16 hinaus.

Demgegenüber befindet sich das in Umfangsrichtung entgegen der Drehrichtung 03 benachbarte Dichtungsteil 23, 26 mit dem inneren Kontaktabschnitt 32a in der jeweils anderen Hälfte.

Die Darstellung in Fig. 11 zeigt auf der unteren Seite der Abbildung die untere Hälfte mit dem unteren rechten Dichtungsteil 24 und oben in der Abbildung ansatzweise die obere Hälfte mit dem oberen rechten Dichtungsteil 23. Betrachtet man die linke Seite so wäre bezogen auf die Abbildung in der Abbildung oben die untere Hälfte und in der Abbildung unten die obere Hälfte des Dichtungsringes 01 bzw. der hinteren Statoreinheit 14.

## Patentansprüche

1. Dichtungsring (01) zur Abdichtung eines um eine Rotorachse (02) umlaufenden Spaltes (18) zwischen einer hinteren Statoreinheit (14) auf einer hinteren Seite (04) und einer vorderen Statoreinheit (15) auf einer vorderen Seite (05) umfassend auf einer linken Seite (07) ein oberes linkes Dichtungsteil (21) und auf einer rechten Seite (08) ein über die Rotorachse (02) gegenüberliegendes unteres rechtes Dichtungsteil (24) und ein oberes rechtes Dichtungsteil (23) und ein über die Rotorachse (02) gegenüberliegendes unteres linkes Dichtungsteil (26), wobei jedes dieser vier Dichtungsteile (21,23,24,26)
- einen Dichtungsabschnitt (31), welcher (31) sich in Umfangsrichtung erstreckt und eine Dichtungsstärke in radialer Richtung und eine zumindest 5-fach größere Dichtungsbreite in axialer Richtung aufweist; und
- einen Kontaktabschnitt (32), welcher (32) an einem ersten Ende des Dichtungsabschnitts (31) angeordnet ist und sich mit der Dichtungsbreite in Umfangsrichtung erstreckt und eine Stärke von höchsten der 0,6-fachen Dichtungsstärke aufweist; und
- einen Überlappungsabschnitt (34), welcher (34) sich in Umfangsrichtung erstreckt und eine Stärke von höchsten der 0,6-fachen Dichtungsstärke aufweist;
umfasst,
**gekennzeichnet durch**
- einen Winkelabschnitt (33), welcher (33) am gegenüberliegenden Ende des Dichtungsabschnitts (31) auf der hinteren Seite (04) angeordnet ist und sich über eine Länge von zumindest der 0,5-fachen Dichtungsbreite in radialer und axialer Richtung erstreckt und eine Stärke geringer als die 0,6-fache Dichtungsstärke aufweist;
- wobei der Überlappungsabschnitt (34) benachbart zum Winkelabschnitt (33) auf der vorderen Seite (05) angeordnet ist.

2. Dichtungsring (01) nach Anspruch 1,
wobei innere Kontaktabschnitte (32a) auf der zur Rotorachse (02) weisenden Seite angeordnet sind und äußere Kontaktabschnitt (32b) auf der radial außen liegenden Seite überlappend zu einem jeweiligen inneren Kontaktabschnitt (32a) angeordnet sind; und/oder wobei sich die Kontaktabschnitte (32) der linken Dichtungsteile (21,26) überlappen und sich die Kontaktabschnitte (32) der rechten Dichtungsteile überlappen (23,24).

3. Dichtungsring (01) nach Anspruch 1 oder 2,
wobei innere Kontaktabschnitte (32a) auf der zur Rotorachse (02) weisenden Seite angeordnet sind und mit dem freien Ende in eine Drehrichtung (03) eines bestimmungsgemäß innerhalb des Dichtrings (01) angeordneten Rotors weisen und äußere Kontaktabschnitte (32b) auf der radial außen liegenden Seite überlappend zum jeweiligen inneren Kontaktabschnitt (32a) angeordnet sind und mit dem freien Ende entgegen der Drehrichtung (03) weisen.

4. Dichtungsring (01) nach Anspruch 2 oder 3,
wobei die Kontaktabschnitte (32) auf der rechten Seite (08) über die Rotorachse (02) gegenüberliegend zu den Kontaktabschnitten (32) auf der linken Seite (07) angeordnet sind.

5. Dichtungsring (01) nach Anspruch 4,
wobei in bestimmungsgemäßer Einbaulage die Kontaktabschnitte (32) in Drehrichtung (03) vor einer Teilungsebene (06) angeordnet sind.

6. Dichtungsring (01) nach einer der Ansprüche 2 bis 5,
wobei die Erstreckung in Umfangsrichtung der Dichtungsteile (23, 26) mit den inneren Kontaktabschnitten (32a) geringer ist als die Erstreckung der Dichtungsteile (21, 24) mit den äußeren Kontaktabschnitten (32b).

7. Dichtungsring (01) nach einer der Ansprüche 1 bis 6,
wobei zu jedem Winkelabschnitt (33) eines Dichtungsteils (21-26) ein gegenüberliegender Winkelabschnitt (33) eines benachbarten Dichtungsteils (21-26) angeordnet ist.

8. Dichtungsring (01) nach Anspruch 7,
wobei die gegenüberliegenden Winkelabschnitte (33) am radial äußeren freien Ende in Kontakt und im Bereich der Verbindung mit dem jeweiligen Dichtungsabschnitt (31) beabstandet zueinander sind.

9. Dichtungsring (01) nach einer der Ansprüche 1 bis 8, umfassend weiterhin ein oberes Hauptteil (22) und ein unteres Hauptteil (25), jeweils umfassend
- einen Dichtungsabschnitt (31), welcher (31) sich jeweils in Umfangsrichtung über zumindest 120°, insbesondere über zumindest 150°, erstreckt; und
- zwei Winkelabschnitte (33), welche (33) jeweils an einem Ende des Dichtungsabschnitts (31) auf der hinteren Seite (04) angeordnet sind; und
- zwei Überlappungsabschnitte (34), welche (34) jeweils benachbart zu einem Winkelabschnitt (33) auf der vorderen Seite (05) angeordnet sind.

10. Statoranordnung umfassend eine hintere Statoreinheit (14) auf einer hinteren Seite (04) und eine vordere Statoreinheit (15) auf einer vorderen Seite (05) und einen dazwischen angeordneten Dichtungsring (01) nach einer der vorhergehenden Ansprüche.

11. Statoranordnung nach Anspruch 10,
wobei die hintere Statoreinheit (14) eine Mehrzahl im Umfang verteilt angeordnete hintere Statorsegmente (16) umfasst; und/oder
wobei die vordere Statoreinheit (15) eine Mehrzahl im Umfang verteilt angeordnete vordere Statorsegmente (17) umfasst.

12. Statoranordnung nach Anspruch 11,
wobei zumindest vier der hinteren Statorsegmente (16) jeweils auf der zum Spalt (18) weisenden Seite eine Aussparung (19) aufweisen, wobei die Winkelabschnitte (33) in die Aussparungen (19) eingreifen.

13. Statoranordnung nach Anspruch 11 oder 12,
wobei die hinteren Statorsegmente (16), welche von der Teilungsebene (06) geschnitten werden, in der gleichen Hälfte montiert sind, in welcher dasjenige benachbarte Dichtungsteil (21,24) mit dem äußeren Kontaktabschnitt (32b) angeordnet ist.

14. Statoranordnung nach Anspruch 13,
wobei das linke Dichtungsteil (21) und das rechte Dichtungsteil (24), welche (21,24) den äußeren Kontaktabschnitt (32b) aufweisen, sich über die Teilungsebene hinaus und über die Breite in Umfangsrichtung des benachbarten hinteren Statorsegments (16) hinaus erstreckt.

## Claims

1. Sealing ring (01) for sealing off a gap (18), surrounding a rotor axis (02), between a rear stator unit (14) on a rear side (04) and a front stator unit (15) on a front side (05), comprising, on a left-hand side (07), an upper left-hand sealing part (21) and, on a right-hand side (08), a lower right-hand sealing part (24) that is situated opposite across the rotor axis (02), and an upper right-hand sealing part (23) and a lower left-hand sealing part (26) that is situated opposite across the rotor axis (02), wherein each of these four sealing parts (21, 23, 24, 26) comprises
- a sealing portion (31), which (31) extends in the circumferential direction and has a sealing thickness in the radial direction and a sealing width in the axial direction which is at least 5 times greater; and
- a contact portion (32), which (32) is arranged at a first end of the sealing portion (31) and extends with the sealing width in the circumferential direction and has a thickness of at most 0.6 times the sealing thickness; and
- an overlapping portion (34), which (34) extends in the circumferential direction and has a thickness of at most 0.6 times the sealing thickness;
**characterized by**
- an angle portion (33), which (33) is arranged at the opposite end of the sealing portion (31) on the rear side (04) and extends over a length of at least 0.5 times the sealing width in the radial and axial directions and has a thickness less than 0.6 times the sealing thickness;
- wherein the overlapping portion (34) is arranged adjacent to the angle portion (33) on the front side (05).

2. Sealing ring (01) according to Claim 1,
wherein inner contact portions (32a) are arranged on the side facing the rotor axis (02), and outer contact portions (32b) are arranged on the radially outer side so as to overlap with a respective inner contact portion (32a); and/or
wherein the contact portions (32) of the left-hand sealing parts (21, 26) overlap and the contact portions (32) of the right-hand sealing parts overlap (23, 24).

3. Sealing ring (01) according to Claim 1 or 2,
wherein inner contact portions (32a) are arranged on the side facing the rotor axis (02), and the free ends thereof point in a direction of rotation (03) of a rotor arranged as intended within the sealing ring (01), and outer contact portions (32b) are arranged on the radially outer side so as to overlap with the respective inner contact portion (32a), and the free ends thereof point counter to the direction of rotation (03).

4. Sealing ring (01) according to Claim 2 or 3,
wherein the contact portions (32) on the right-hand side (08) are arranged opposite the contact portions (32) on the left-hand side (07) across the rotor axis (02).

5. Sealing ring (01) according to Claim 4,
wherein, in the installation position as intended, the contact portions (32) are arranged ahead of a dividing plane (06) in the direction of rotation (03).

6. Sealing ring (01) according to one of Claims 2 to 5,
wherein the extent in the circumferential direction of the sealing parts (23, 26) having the inner contact portions (32a) is less than the extent of the sealing parts (21, 24) having the outer contact portions (32b).

7. Sealing ring (01) according to one of Claims 1 to 6,
wherein, for each angle portion (33) of a sealing part (21-26), an opposite angle portion (33) of an adjacent sealing part (21-26) is arranged.

8. Sealing ring (01) according to Claim 7,
wherein the opposite angle portions (33) are in contact at the radially outer free end and spaced apart from one another in the region of the connection to the respective sealing portion (31).

9. Sealing ring (01) according to one of Claims 1 to 8, further comprising an upper main part (22) and a lower main part (25), each comprising
- a sealing portion (31), which (31) in each case extends over at least 120°, in particular over at least 150°, in the circumferential direction; and
- two angle portions (33), which (33) are each arranged on the rear side (04) at one end of the sealing portion (31); and
- two overlapping portions (34), which (34) are each arranged on the front side (05), adjacent to an angle portion (33).

10. Stator arrangement comprising a rear stator unit (14) on a rear side (04) and a front stator unit (15) on a front side (05), and a sealing ring (01) according to one of the preceding claims arranged in between.

11. Stator arrangement according to Claim 10,
wherein the rear stator unit (14) comprises a plurality of rear stator segments (16) distributed around the circumference;
and/or
wherein the front stator unit (15) comprises a plurality of front stator segments (17) distributed around the circumference.

12. Stator arrangement according to Claim 11,
wherein at least four of the rear stator segments (16) each have a cutout (19) on the side facing the gap (18), wherein the angle portions (33) engage in the cutouts (19).

13. Stator arrangement according to Claim 11 or 12,
wherein the rear stator segments (16) which are intersected by the dividing plane (06) are mounted in the same half in which the adjacent sealing part (21, 24) with the outer contact portion (32b) is arranged.

14. Stator arrangement according to Claim 13,
wherein the left-hand sealing part (21) and the right-hand sealing part (24), which (21, 24) have the outer contact portion (32b), extend beyond the dividing plane and beyond the width in the circumferential direction of the adjacent rear stator segment (16).

## Revendications

1. Bague (01) d'étanchéité pour rendre étanche un intervalle (18) faisant le tour d'un axe (02) de rotor entre une unité (14) arrière de stator d'un côté (04) arrière et une unité (15) avant de stator d'un côté (05) avant comprenant d'un côté (07) gauche une partie (21) d'étanchéité gauche supérieure et d'un côté (08) droit une partie (24) d'étanchéité droite inférieure, opposée par rapport à l'axe (02) du rotor, et une partie (23) d'étanchéité droite supérieure et une partie (26) d'étanchéité gauche inférieure, opposée par rapport à l'axe (02) du moteur, dans laquelle chacune de ces quatre parties (21, 23, 24, 26) d'étanchéité comprend
- un segment (31) d'étanchéité, qui (31) s'étend dans la direction du pourtour et a une épaisseur d'étanchéité dans la direction radiale et une largeur d'étanchéité dans la direction axiale au moins 5 fois plus grande ; et
- un segment (32) de contact, qui (32) est disposé à une première extrémité du segment (31) d'étanchéité et qui s'étend par la largeur d'étanchéité dans la direction du pourtour et a une épaisseur d'au plus 0,6 fois l'épaisseur d'étanchéité ; et
- un segment (34) de chevauchement, qui (34) s'étend dans la direction du pourtour et a une épaisseur d'au plus 0,6 fois l'épaisseur d'étanchéité ;
**caractérisée par**
- un segment (33) angulaire, qui (33) est disposé à l'extrémité opposée du segment (31) d'étanchéité du côté (04) arrière et qui s'étendent sur une longueur d'au moins 0,5 fois la largeur d'étanchéité dans la direction radiale et dans la direction axiale et qui a une épaisseur plus petite que 0,6 fois l'épaisseur d'étanchéité ;
- dans laquelle le segment (34) de chevauchement est disposé du côté (05) avant en étant contigu du segment (33) angulaire.

2. Bague (01) d'étanchéité suivant la revendication 1,
dans laquelle des segments (32a) intérieurs de contact sont disposés du côté tourné vers l'axe (02) du rotor et des segments (32b) extérieurs de contact sont disposés du côté se trouvant à l'extérieur radialement à chevauchement avec un segment (32a) de contact intérieur respectif ; et/ou dans lequel les segments (32) de contact des parties (21, 26) d'étanchéité gauches se chevauchent et les segments (32) de contact des parties d'étanchéité droites se chevauchent (23, 24).

3. Bague (01) d'étanchéité suivant la revendication 1 ou 2,
dans laquelle des segments (32a) intérieurs de contact sont disposés du côté tourné vers l'axe (02) du rotor et sont tournés par l'extrémité libre dans un sens (03) de rotation d'un rotor monté conformément aux prescriptions dans la bague (01) d'étanchéité et des segments (32b) extérieurs de contact sont disposés du côté se trouvant à l'extérieur radialement à chevauchement avec le segment (32a) intérieur de contact respectif et sont tournés par l'extrémité libre dans le sens contraire au sens (03) de rotation.

4. Bague (01) d'étanchéité suivant la revendication 2 ou 3,
dans laquelle les segments (32) de contact sont disposés du côté (08) droit en étant opposés par rapport à l'axe (02) du rotor au segment (32) de contact du côté (07) gauche.

5. Bague (01) d'étanchéité suivant la revendication 4,
dans laquelle dans une position de montage conforme aux prescriptions, les segments (32) de contact sont disposés dans le sens (03) de rotation avant un plan (06) de division.

6. Bague (01) d'étanchéité suivant l'une des revendications 2 à 5,
dans laquelle l'étendue dans la direction du pourtour des parties (23, 26) d'étanchéité ayant les segments (32a) intérieurs de contact est plus petite que l'étendue des parties (21, 24) d'étanchéité ayant les segments (32b) extérieurs de contact.

7. Bague (01) d'étanchéité suivant l'une des revendications 1 à 6,
dans laquelle, par rapport à chaque segment (33) angulaire d'une partie (21-26) d'étanchéité est disposé un segment (33) angulaire opposé d'une partie (21-26) d'étanchéité voisine.

8. Bague (01) d'étanchéité suivant la revendication 7,
dans laquelle les segments (33) angulaires opposés sont à l'extrémité extérieure radialement en contact l'un avec l'autre et dans la partie de la liaison avec le segment (31) respectif d'étanchéité à distance l'un de l'autre.

9. Bague (01) d'étanchéité suivant l'une des revendications 1 à 8,
comprenant en outre une partie (22) principale supérieure et une partie (25) principale inférieure, comprenant respectivement
- un segment (31) d'étanchéité, qui (31) s'étend respectivement dans la direction du pourtour sur au moins 120°, en particulier sur au moins 150° ; et
- deux segments (33) angulaires, qui (33) sont disposés du côté (04) arrière respectivement à une extrémité du segment (31) d'étanchéité ; et
- deux segments (34) de chevauchement, qui (34) sont disposés du côté (05) avant en étant respectivement contigu d'un segment (33) angulaire.

10. Agencement de stator comprenant une unité (14) arrière de stator d'un côté (04) arrière et une unité (15) avant de stator d'un côté (05) avant et une bague (01) d'étanchéité disposée suivant l'une des revendications précédentes disposées entre elles.

11. Agencement de stator suivant la revendication 10,
dans lequel l'unité (14) arrière de stator comprend une pluralité de segments (16) arrière de stator disposés de manière répartie sur le pourtour ; et/ou
dans lequel l'unité (15) avant de stator comprend une pluralité de segments (17) avant de stator disposés de manière répartie sur le pourtour.

12. Agencement de stator suivant la revendication 11,
dans lequel au moins quatre des segments (16) arrière de stator ont respectivement du côté tourné vers l'intervalle (18) un évidement (19), dans lequel les segments (33) angulaires pénètrent dans les évidements (19).

13. Agencement de stator suivant la revendication 11 ou 12,
dans lequel les segments (16) arrière de stator, qui sont coupés du plan (06) de division, sont montés dans la même moitié que celle dans laquelle la partie (21, 24) d'étanchéité voisine ayant le segment (32b) extérieur de contact est disposée.

14. Agencement de stator suivant la revendication 13,
dans lequel la partie (21) d'étanchéité gauche et la partie (24) d'étanchéité droite, qui (21, 24) ont le segment (32b) extérieur de contact s'étend au-delà du plan de division et sur la largeur dans la direction du pourtour du segment (16) arrière de stator voisin.
